# EUROPEAN PATENT APPLICATION

(11) **EP 0 797 038 A1**
(43) Date of publication of application: **24.09.1997**
(21) Application number: 96830135.8
(22) Date of filing: 20.03.1996
(51) Int. Cl.: F16L 21/00

(54) **Pipe fitting device; particularly for ventilation systems**

(71) Applicant: Climovent System s.a.s. di Franco Guazzone e C, 10078 Venaria Reale (Torino) (IT)
(72) Inventor: Guazzone, Alessandro, 10149 Torino (IT)
(74) Representative: Spandonari, Carlo, Dr. Ing.

(57) **Abstract**

The pipe fitting device for comprises a sleeve (10) having at least two tubular spigots (14, 16) suitable for being inserted into respective ends of at least two pipes (26) which are to be connected. Near each spigot, the sleeve (10) wall bears a respective, peripheral row of teeth (18, 20) made of transverse cuts or nips (23), near each of which the sheet is obliquely, outwardly lifted on the side nearer the spigot. The teeth are adapted to engage corresponding hooking means (28) on the internal surface of the connected pipe (26). These hooking means themselves comprise a peripheral row of teeth (28) made of transverse cuts in the pipe wall at a predetermined distance from the pipe end, the metal sheet being obliquely, inwardly depressed near each cut on the side nearer to the pipe end.

## Description

This invention is concerned with a pipe fitting device, particularly for metal sheet pipes in ventilation systems and air conveying systems generally.

Metal sheet pipes are widely used in the assembly of air conveying systems, e.g. heating, air conditioning, and ventilation systems, on premises such as homes, industrial rooms and the like. When setting up such a system, the installer builds up the required duct network by assembling pipes to one another by the intermediary of fitting devices such as sleeves, elbows, branches, and the like. These are provided with spigots fitting more or less tightly within the pipe ends. In order to make the fitting secure, the installer usually drills a few holes through the overlapping walls of the pipe and the sleeve, and finally inserts rivets or self-tapping screws in the holes. The fitting may then be sealed with adhesive tape.

Drilling and riveting, however, are relatively awkward operations to be performed on site, and, moreover, they compel the installer to carry an electric drill and/or a riveter, both of considerable weight and bulk, and both often requiring an electric supply. If self-tapping screws are used, the non-negligible cost of the screws must also be considered.

The essential object of the invention is therefore to provide a pipe fitting device for metal sheet pipes, particularly for air conveying, by means of which the fitting can be inserted and locked by quick and simple operations, without a need for heavy tools and without any appreciable cost increase of the parts.

The above object, as well as other objects and advantages such as will appear from the following disclosure, is attained by the invention with a pipe fitting device as recited in claim 1.

The invention will now be described in more detail, with reference to a preferred embodiment given by way of example and shown in the attached drawing, wherein:
Fig. 1 is a view, in longitudinal cross-section, of a pipe fitting device according to the preferred embodiment of the invention;
Fig. 2 is an end view of the pipe fitting device of Fig. 1;
Fig. 3 is a detail view, in longitudinal cross-section, of a tooth of the device of Fig. 1, on an enlarged scale;
Fig. 4 is a view, in longitudinal cross-section, of a pipe provided with teeth for interaction with the pipe fitting device of Figs. 1 to 3;
Fig. 5 is a partially exploded view, in longitudinal cross-section, of a fitting between two pipes, made with the device of Figs. 1 to 3; and
Fig. 6 is a simplified side view of a pipe nipper for punching pipes to be used with the fitting device of Figs. 1 to 3.

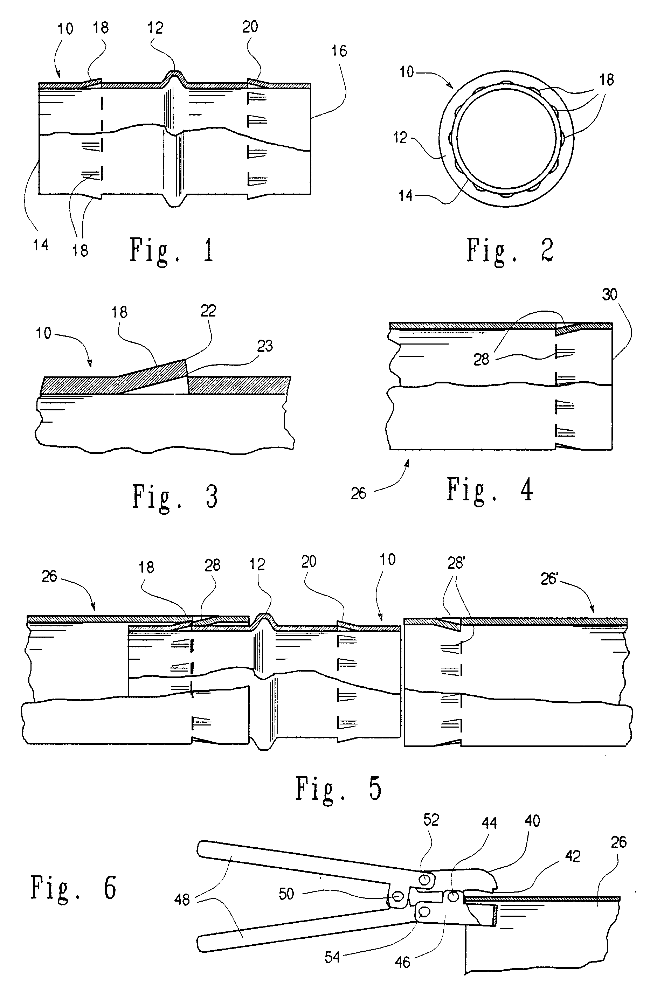

Figs. 1 and 2 show a pipe fitting device according to a preferred embodiment of the invention. The device is a cylindrical metal sheet sleeve 10, having a peripheral, projecting rib or ledge 12, placed halfway between two opposite spigots 14, 16 of the sleeve. In intermediate positions between the rims of each of spigots 14, 16 and rib 12, sleeve 10 has a respective, peripheral row of outwardly projecting teeth 18, 20.

As best shown on Fig. 3, each tooth is made by punching the metal sheet so that a sharp step 22 is formed on its outside surface, along a cut or nip 23 made in the metal sheet, the cut being at right angles to the axial direction of the sleeve. The metal sheet slopes gently from the top of step 22 in the direction of spigot 14. Teeth 20 are identically formed, but they are reversed mirror-like with respect to Fig. 1, so that their sharp steps face the direction of rib 12, their slopes facing the the direction of spigot 16.

Teeth 18 and 20 can be made by simple sheet punching methods, as known in the art, e.g. by rolling on pre-formed pipes, such as spiral-sheet pipes, or by punching a flat metal sheet, before rolling the sheet into pipes which are then riveted or welded along a longitudinal seam.

Fig. 4 shows a metal sheet pipe 26 having a diameter slightly larger than sleeve 10. Pipe 26 also has a peripheral row of teeth 28, which, however, project inwardly of the pipe, at a distance from its end 30 which is substantially equal to the distance from the row of teeth 18 (or 20) of device 10 to its rib or ledge 12. Teeth 28 of pipe 26 are made similarly to teeth 18 or 20 of fitting device 10, except that step 22 is depressed inwardly of the pipe. The slope faces toward the pipe end. Teeth 28 can be easily made by the same methods mentioned above with reference to the teeth of the fitting device.

In use, fitting device 10 is inserted into two metal sheet pipes 26, 26', as shown on Fig. 5, the pipes being forced along until they abut the opposite sides of central rib 12 on the fitting device. During this operation, the slopes of teeth 28 of each pipe 26, 26' meet the slopes of the respective teeth 18 or 20 of the fitting device, with mutual, elastical straining on the sheet such that the respective steps on the fitting device and on the pipes overstep each other. The positions of the teeth are such that the overstepping takes place when the pipe end abuts the central rib 12 on the fitting device.

It is apparent that each pipe, once the teeth have overstepped each other, cannot again be pulled off from the fitting device, due to the mutual, insurmountable abutment of the contrasting steps on the pipe and on the fitting device.

The cuts or nips 23 in the sleeve and the similar cuts in the pipes create barely perceptible slits, which are substantially negligible, as far as pressure loss is concerned, with respect to other leaks usually existing in the system. If necessary, the cuts can be sealed with adhesive tape, as usually in the art as a completion of a fitting. The adhesive tape, moreover, could be applied to the pipes in the factory, thus relieving the installer even from this simple task.

In order to ensure that at least some of the teeth in the pipe and in the sleeve are aligned, irrespective of the mutual angular position of the pipe with respect to the sleeve around their common axis, it is preferable that the pitch between adjacent teeth in the rows of teeth 18 (or 20) of the sleeve is different form the pitch between the teeth 28 in the rows of teeth made in the pipe. Even more preferably, the pitch in each row of teeth is not uniform, but rather irregular. It should be noted that, for a secure connection, it is not necessary that all the teeth are engaged, but it is sufficient that a majority of them are engaged.

As mentioned above, the pipe fitting device of the invention can be easily made by industrial processes commonly used in the fabrication of metal sheet pipes and their accessory devices, without any substantial increase of the production costs with respect to conventional pipes and accessory devices. The pipes themselves can be provided with teeth at both ends, similarly to the pipe fitting device, in standard lengths as common in the art. The installer will then only need to approach the pipe and the fitting device end-to-end and forcefully push them against each other until the teeth cross each other, and then possibly seal the joint with adhesive tape or other desired sealant.

In certain cases, however, the installer may have the need to trim a pipe down to an unusual length, thus severing the toothed portion away. In this infrequent case, the installer can himself provide the pipe with teeth near its end, by means of a simple toggle nipper, as shown on Fig. 6. The nipper of Fig. 6 comprises a punch 40 having a step 42, which is hinged at 44 with a die 46. A pair of levers 48, which are hinged together at 50, are jointed to punch 40 and die 46 at 52 and 54, respectively.

By gripping the metal sheet of a pipe 26 in the nipper, as shown on Fig. 6, teeth similar to teeth 28 can be easily made in the pipe. The operation can be easily carried out on the site by the installer himself. The distance from hinge 44 to step 42 is equal to the distance of teeth 18 (or 20) of the pipe fitting device from its peripheral rib 12, so that, if the pipe rim abuts against hinge 44, the teeth are correctly placed on the pipe. The angular position of the teeth, as explained above, may be to a large extent arbitrary, provided that the number of teeth exceeds a minimum value, to be established in relation to the pipe diameter.

Although a pipe fitting device in the shape of a straight sleeve has been described for simplicity, under the invention the pipe fitting device may be a tubular elbow, or a T-branch, etc., or any hollow body of metal sheet having one or more spigots which are provided with rows of teeth as described above and as shown on the Figures. These alternative shapes of the device are not shown because they are obvious for the person skilled in the art.

The pipe fitting device may also be provided with gaskets (not shown), e.g. of a radial-flap-type gasket as disclosed in DE-A-23 05 936, which are attached by swaging along the rimes of the spigots or riveted in the areas between the rows of teeth and the central rib. Moreover, although the cuts defining steps 22 in the preferred embodiment are at right angles to the axial direction of the sleeve (or of the pipe), according to a modification not shown the steps could be slightly slanted to the axial direction, or, alternatively, they migh be V-shaped. Further, although the distances of the teeth from the associate spigot and the rib in the fitting device are shown approximately equal in the drawing, those distances can be different. The above and other modifications and changes should be regarded as part of the invention as defined in the attached claims.

## Claims

1. A pipe fitting device for air conveying pipes, comprising a hollow body (10) having at least two tubular, metal-sheet spigots (14, 16) suitable for insertion into respective ends of at least two pipes (26) which are to be connected, characterized in that near each spigot the wall of the hollow body (10) bears a respective, peripheral row of teeth (18, 20) made of transverse cuts or nips (23), near each of which the metal sheet is obliquely, outwardly lifted on the side nearer the spigot, the teeth being adapted to engage corresponding hooking means (28) on the internal surface of the connected pipe (26).

2. The fitting device of claim 1, further characterized in that said hooking means on the pipe (26) comprise a peripheral row of teeth (28) made of transverse cuts in the pipe wall at a predetermined distance from the pipe end, the metal sheet being obliquely, inwardly depressed near each cut on the side nearer to the pipe end.

3. The fitting device of claim 1 or 2, characterized in that said cuts (23) in the wall of the hollow body (10) and/or in the pipe (28) are straight.

4. The fitting device of claim 3, characterized in that said straight cuts (23) are substantially at right angles with respect to the axial direction of the portion near the spigot of the hollow body (10) or near the pipe end (28), respectively.

5. The fitting device of claim 3, characterized in that said straight cuts (23) are slanted with respect to the axial direction.

6. The fitting device of any of claims 1 to 5, characterized in that a peripheral ledge (12) for abutment of the pipe end is associated to each spigot (14, 16) of the hollow body (10), at a distance from said cuts in the hollow body that is equal to the distance of the cuts (28) in the pipe (26) from the pipe end (30).

7. The fitting device of any of claims 1 to 6, characterized in that said hollow body is a straight sleeve.

8. The fitting device of any of claims 1 to 6, characterized in that said hollow body is an elbow sleeve.

9. The fitting device of any of claims 1 to 6, characterized in that said hollow body is a sleeve with a T-branch.
